## Europäisches Patentamt

## European Patent Office

## Office européen des brevets

(19)

(11) Veröffentlichungsnummer: **0 036 968**
**B1**

(12)

# EUROPÄISCHE PATENTSCHRIFT

(45) Veröffentlichungstag der Patentschrift:
**05.12.84**

(51) Int. Cl.³: **B 23 K 1/16** // B21C37/08

(21) Anmeldenummer: **81101620.3**

(22) Anmeldetag: **06.03.81**

(54) Verfahren zur Herstellung gelöteter, mehrlagiger Metallrohre und Vorrichtung zur Durchführung des Verfahrens.

(30) Priorität: **28.03.80 DE 3012086**

(43) Veröffentlichungstag der Anmeldung:
**07.10.81 Patentblatt 81/40**

(45) Bekanntmachung des Hinweises auf die Patenterteilung:
**05.12.84 Patentblatt 84/49**

(84) Benannte Vertragsstaaten:
**AT BE CH FR GB IT LI LU NL SE**

(56) Entgegenhaltungen:
**DE - C - 518 808**
**DE - C - 886 945**
**DE - C - 954 776**

(73) Patentinhaber: **Weiss, Hans Joachim, Ing. grad.,**
**Nassauische Strasse 19, D-5912 Hilchenbach (DE)**

(72) Erfinder: **Weiss, Hans Joachim, Ing. grad., Nassauische**
**Strasse 19, D-5912 Hilchenbach (DE)**

(74) Vertreter: **Ostriga, Harald et al,**
**Stresemannstrasse 6-8 Postfach 20 13 27,**
**D-5600 Wuppertal 2 (DE)**

## Beschreibung

Die Erfindung betrifft ein Verfahren zur Herstellung gelöteter, mehrlagiger Metallrohre, bei welchem ein Metallband, insbesondere Stahlband, unter Zuführung eines insbesondere im wesentlichen aus Kupfer bestehenden Lots stufenweise zu einem mehrlagigen, vornehmlich zweilagigen, Rohrkörper bildsam verformt, der bewegte Rohrkörper sodann über zwei voneinander distanzierte, eine Erwärmungszone begrenzende elektrische Kontaktstellen konduktiv auf Löttemperatur erwärmt, unter Bildung einer Glühzone für eine Zeitdauer auf Löttemperatur gehalten und sodann wieder abgekühlt wird. Das vorbeschriebene Verfahren ist durch die DE-PS 813 839 (s. dort insbesondere Fig. 2) bekanntgeworden. Mit dem bekannten Verfahren war die an sich zu begrüssende Absicht verbunden, die Herstellung von mehrlagigen Metallrohren, insbesondere von Stahlrohren mit Kupfer als Lot, auch unter Einbeziehung des Lötvorganges kontinuierlich ablaufen zu lassen. Der kontinuierliche Lötvorgang bzw. das Löten im Durchlaufverfahren im Wege der konduktiven Erwärmung hat jedoch bislang wegen etlicher, niemals überwundener technischer Schwierigkeiten zu keiner nennenswerten Betriebsreife geführt. Die technischen Schwierigkeiten bestanden bisher zum Teil darin, dass Toleranzschwankungen bei den Abmessungen des Vormaterials, z.B. beim Stahlband oder bei dessen Kupferbeschichtung, die pro Zeiteinheit in die Erwärmungszone eingeführten Massen und damit zugleich das Ergebnis der konduktiven Erwärmung veränderten. Eine Vergrösserung der zugeführten Rohrkörper-Massen hat nämlich zunächst ein Absinken der Löttemperatur mit dem Ergebnis einer Kaltlötung zur Folge, die einen ungenügenden Zusammenhang der miteinander zu verbindenden Lagen bedeutet. Zur Vermeidung einer Kaltlötung hätte beim eingangs beschriebenen bekannten Verfahren rein theoretisch die Möglichkeit bestanden, die elektrische Leistung, insbesondere durch Erhöhung der Stromstärke, zu vergrössern. Bei Arbeiten des Patentsuchers, die der Erfindung vorausgingen, hat sich indes gezeigt, dass eine Erhöhung der elektrischen Leistung (als Reaktion auf eine Vergrösserung der zugeführten Rohrkörper-Massen) eine ungleichmässige Erwärmung, verbunden mit stellenweise auftretenden Überhitzungen, zur Folge hat. Überhitzungen des Rohrkörpers bewirken aber ein Verdampfen oder zu starkes Eindiffundieren des Kupferlots in das Stahlgefüge oder aber ein unkontrolliertes Verlaufen des Lots mit dem nachteiligen Ergebnis eines mangelhaften Zusammenhaltens zwischen den miteinander zu verbindenden Lagen des Rohrkörpers.

Massenschwankungen mit ähnlichen negativen Auswirkungen können auch durch den Walz- bzw. Einrollvorgang hervorgerufen werden, da gegebenenfalls mit der bildsamen Verformung zum Rohrkörper nicht nur eine Streckung des Bandmaterials in Längsrichtung sondern auch in Querrichtung erfolgt.

Ausserdem entstanden bislang Schwierigkeiten mit dem Nachteil einer ungleichmässigen Erwärmung infolge unterschiedlicher Kaltverfestigung des bildsam verformten Materials. Dieses deswegen, weil beispielsweise stärker verfestigtes Stahlband zu seiner Erwärmung einen grösseren Energiebedarf erfordert.

Bei alledem darf nicht vergessen werden, dass eine gleichmässige Erwärmung des mit dem Lot versehenen Rohrkörpers auf Löttemperatur nur dann zum Erfolg führt, wenn zugleich eine durch Erfahrung zu ermittelnde Verweilzeit während des Lötens eingehalten wird. Bei zu geringer Verweilzeit tritt nämlich wiederum eine Kaltlötung auf, während bei zu grosser Verweilzeit ein nachteiliges zu starkes Eindiffundieren des Lots in das benachbarte Metall, z.B. des Kupfers in das Stahlband, auftritt, oder aber das Lot unkontrolliert verläuft.

Die bislang nicht bewältigten vorbeschriebenen Schwierigkeiten beim Durchlauf-Lötverfahren im Wege der konduktiven Erwärmung führten schliesslich dazu, dass man den kontinuierlich gerollten, mit Lot versehenen Rohrkörper in feste Absatzlängen von beispielsweise etwa 32 m unterteilte und derartige Rohrlängenabschnitte chargenweise in einem gesonderten Lötofen gleichmässig auf Löttemperatur erwärmte, wobei jeder einzelne Rohrlängenabschnitt in einem gesonderten Muffelrohr aufgenommen war. Nachdem das kontinuierliche Durchlauf-Lötverfahren technisch nicht realisiert werden konnte, behielt man das diskontinuierliche Lötverfahren bis zur gegenwärtigen Zeit bei (vgl. DE-AS 2 839 684 Sp. 4 Zeilen 23–26, Fig. 14 und 15).

Ausgehend von dem eingangsbeschriebenen Verfahren (DE-PS 813 839) liegt der Erfindung im Bewusstsein der Nachteile des Bekannten die Aufgabe zugrunde, das bekannte Verfahren so auszugestalten, dass ein kontinuierliches bzw. Durchlauf-Lötverfahren trotz Ungleichmässigkeiten beim unverlöteten Rohrkörper auf einfache Weise zu handhaben ist und zugleich zu einem einwandfreien Arbeitsergebnis führt. Entsprechend der Erfindung wurde diese Aufgabe dadurch gelöst, dass zum Zwecke einer gleichmässigen Erwärmung des Rohrkörpers auf Löttemperatur über den nötigen Zeitraum hinweg die Länge der Glühzone für eine bestimmte Rohrvorschubgeschwindigkeit gemessen und dadurch konstant gehalten wird, dass der Abstand zwischen den beiden elektrischen Kontaktstellen und gegebenenfalls auch die elektrische Leistung dem Kaltverfestigungsgrad und proportional der pro Zeiteinheit in die Erwärmungszone hineinbewegten Masse des Rohrkörpers eingestellt werden.

Das erfindungsgemässe Verfahren betrifft vornehmlich kupfergelötete Zweilagen-Stahlrohre. Das Kupferlot wird hierbei zunächst vorzugsweise einseitig oder zweiseitig in jeweils bekannter Weise galvanisch oder durch Plattieren auf das hinterher zu einem Rohrkörper bildsam zu verformende Stahlband aufgebracht. Sobald sich aufgrund der weiter oben beschriebenen Ursachen eine Änderung der Rohrkörper-Daten, z.B. eine Vergrösserung der Rohrkörper-Masse ergibt, wird diesem konkreten Umstand entsprechend der Erfindung dadurch begegnet, dass der Abstand zwischen den beiden elektrischen Kontaktstellen vergrössert wird. Wenn die Änderung der pro Zeiteinheit in die Erwärmungszone hineinbewegte Masse des Rohrkörpers ein gewisses Mass übersteigt, sieht die Erfindung ausser einer Vergrösserung des Abstandes zwischen den beiden Kontaktstellen eine Erhöhung der über die Kontaktstellen zuzuführenden elektrischen Leistung, und zwar der Stromstärke, vor. Bei Erhöhung der elektrischen Leistung tritt in überraschender Weise keine schädliche lokale Überhitzung des Rohrkörpers am Ende der Erwärmungsstrecke auf. Diesen Effekt kann man vielleicht so erklären, dass durch eine Vergrösserung der Distanz zwischen den beiden Kontaktstellen zugleich die Erwärmungszone im Sinne einer Vergleichmässigung gestreckt wird.

Eine Vergrösserung der Distanz zwischen den beiden Kontaktstellen, gegebenenfalls verbunden mit einer Erhöhung der zuzuführenden elektrischen Leistung, ist entsprechend der Erfindung auch dann vorzusehen, wenn das der Erwärmungszone zugeführte Rohrkörper-Material einen grösseren Kaltverfestigungsgrad aufweist.

Umgekehrt wird entsprechend der Erfindung die Distanz zwischen den beiden Kontaktstellen verkürzt und gegebenenfalls die zuzuführende elektrische Leistung beeinflusst, z.B. verringert, wenn sich die in die Erwärmungszone hineinbewegte Masse des Rohrkörpers vermindert oder der Rohrkörper-Werkstoff einen geringeren Kaltverfestigungsgrad aufweist.

Ein erfindungswesentliches, einfach zu realisierendes Anzeigemerkmal zur Einhaltung optimaler Lötverhältnisse besteht darin, dass die Länge der Glühzone für eine bestimmte Rohrvorschubgeschwindigkeit gemessen und im wesentlichen konstant gehalten wird. Die für die Erfindung massgebliche Glühzone (bei reduzierender Atmosphäre) ist durch Weissglut, verbunden mit einem grünlichen Schimmer, gekennzeichnet. Wenn sich demnach die Glühzone aufgrund einer Änderung der Rohrkörper-Daten verkürzt, wird der Abstand zwischen den beiden elektrischen Kontaktstellen, gegebenenfalls unter Beeinflussung, insbesondere unter Erhöhung der zuzuführenden elektrischen Leistung vergrössert. Wenn sich die Glühzone aufgrund einer Änderung irgendwelcher Rohrkörper-Daten aber verlängert, so wird in Anwendung des erfindungsgemässen Verfahrens der Abstand zwischen den beiden elektrischen Kontaktstellen (gegebenenfalls auch unter Beeinflussung, insbesondere durch Verminderung, der elektrischen Leistung) verkürzt.

Beim vorbeschriebenen Verfahren wird die Vorschub- bzw. Fördergeschwindigkeit des Rohrkörpers im wesentlichen konstant gehalten, obwohl das erfindungsgemässe Verfahren auf einfache Weise auch eine Anpassung an unterschiedlichste Fördergeschwindigkeiten gestattet.

Wie bereits weiter oben erwähnt, ist es für einen optimalen Löterfolg wesentlich, dass die jeweils empirisch zu ermittelnde Verweilzeit während des Lötvorganges im wesentlichen eingehalten wird. Die Verweilzeit eines bestimmten, dem Lötvorgang zu unterwerfenden Rohrquerschnittes ist insbesondere auch eine Funktion der Rohrkörper-Vorschub- bzw. Fördergeschwindigkeit. Das erfindungsgemässe Verfahren bietet zugleich den Vorteil, die Verweilzeit bei unterschiedlichen Vorschubgeschwindigkeiten des Rohrkörpers im Sinne einer Konstanthaltung der Verweilzeit zu beeinflussen.

Bei vergrösserter Vorschubgeschwindigkeit wird der Abstand zwischen den beiden elektrischen Kontaktstellen, gegebenenfalls unter Erhöhung der zuzuführenden elektrischen Leistung, vergrössert, während bei einer Verringerung der Vorschubgeschwindigkeit der Abstand zwischen den beiden elektrischen Kontaktstellen verringert und die zuzuführende elektrische Leistung gegebenenfalls zugleich vermindert wird.

Im übrigen ist es von einem Verfahren zur Herstellung gelöteter mehrlagiger Metallrohre grundsätzlich bekannt (DE-PS 886 945), zur konduktiven Erwärmung des Rohrkörpers vorgesehene Elektroden (Kontaktrollen) während des Betriebes in Rohrlängsrichtung zu verstellen. Hierzu benötigt das bekannte Verfahren mindestens drei Elektroden, welche zwischen sich zwei unmittelbar aufeinanderfolgende Widerstandsstrecken begrenzen. In der ersten stromaufwärts angeordneten Widerstandsstrecke zwischen den beiden ersten – verschieblichen – Elektroden wird das Rohr bis zur Schmelztemperatur des Bindemetalls (Kupfer) erwärmt, während in der anschliessenden stromabwärts gelegenen zweiten Widerstandsstrecke die Temperatur des Bindemetalls etwas höher ist als seine Schmelztemperatur.

Bei dem bekannten Verfahren stellt die Temperatur die Regelgrösse dar, wobei die weiter oben beschriebene und für einen guten Löterfolg so wichtige Verweilzeit des Rohres in der Lötzone nur sehr schwer abzuschätzen ist. Hinzu kommt, dass die Temperaturregelung mit den beiden nach Art eines elektrischen Stromteilers geschalteten Widerstandsstrecken auch eine unabhängige Verstellung beider beweglicher Elektroden relativ zueinander erfordern kann, was regeltechnisch keinesfalls einfach ist.

Bei dem bekannten Verfahren (DE-PS 886 945) erstreckt sich die Glühzone nur als Funktion der gewünschten Temperatur jedoch ohne Rücksicht auf eine bestimmte Glühzonen-Länge gewissermassen willkürlich über die gesamte zweite Widerstandsstrecke und ragt zudem stromaufwärts in die erste Widerstandsstrecke hinein. Je nach Temperaturregelung kann hierbei die Glühzone zu lang (Gefahr einer Lot-Verdampfung) oder zu kurz (Gefahr einer kalten Lötstelle) sein.

Die Erfindung hat hingegen erkannt, dass bei einem nur zwei Elektroden benötigenden, bislang jedoch noch nicht praktizierten Verfahren gemäss der eingangs erwähnten DE-PS 813 839 (s. dort Fig. 2) die Länge der Glühzone, welche lediglich einen Teil der ausschliesslich zwischen den beiden Elektroden angeordneten Erwärmungszone darstellt, sich in Abhängigkeit von einer Änderung der Rohrdaten vergrössert oder verkleinert. Diese Längenänderung der Glühzone, in welche sowohl die Temperatur als auch unmittelbar die Rohr-Verweilzeit während des Lötvorganges eingehen, benutzt die Erfindung im Unterschied zum Verfahren gemäss der DE-PS 886 945 als komplexe Regelgrösse. Der Erfindung ist es damit gelungen, die einfachen apparativen Voraussetzungen des Verfahrens gemäss der DE-PS 813 839, welches zwischen zwei Elektroden gewissermassen eine integrierte Vorwärm- und Glühzone bildet, mit einfachsten regeltechnischen Mitteln so auszubilden, dass eine Änderung der Rohrdaten während des Betriebes sofort berücksichtigt und somit ein einwandfreies Produkt erzielt werden kann.

In jüngerer Zeit ist durch die DE-OS 2 828 960 zwar ein kontinuierliches Verfahren zur Herstellung zweilagiger kupfergelöteter Stahlrohre bekanntgeworden, jedoch arbeitet dieses bekannte Verfahren mit einer mehrstufigen Erwärmung zugleich mit unterschiedlicher Wärmevermittlung und erfordert daher einen erheblichen regeltechnischen und apparativen Aufwand.

Die Erfindung betrifft ausserdem eine Vorrichtung zur Durchführung des Verfahrens mit einer Walz- bzw. Einrollvorrichtung zur Herstellung des Rohrkörpers, einer konduktiven Erwärmungsvorrichtung mit zwei bezüglich des Rohrkörpers voneinander distanzierten, diesen berührenden elektrischen Kontakten, einer die Erwärmungszone mindestens teilweise umschliessenden Wärmekammer sowie mit einer sich an die Erwärmungszone anschliessenden, eine Kühlstrecke aufnehmenden Kühlkammer (DE-PS 813 839, Fig. 2).

Die Erfindung hat sich ausserdem die Aufgabe gestellt, die vorbekannte im Oberbegriff des Vorrichtungsanspruchs 2 definierte Vorrichtung so auszugestalten, dass sie die Durchführung des vorbeschriebenen erfindungsgemässen Verfahrens gestattet.

Entsprechend der Erfindung wurde gemäss Anspruch 2 diese Aufgabe dadurch gelöst, dass zum Zwecke einer gleichmässigen Erwärmung des Rohrkörpers auf Löttemperatur über den nötigen Zeitraum hinweg die Länge der Glühzone für eine bestimmte Rohrvorschubgeschwindigkeit messbar und dadurch konstant halbbar ist, dass mindestens ein Kontakt beweglich und arretierbar ausgebildet ist. Hierbei ist es zur Erzielung einer einfachen Bauform zweckmässig, dass ein Kontakt raumfest, der andere Kontakt jedoch beweglich und arretierbar ausgebildet ist.

Eine bevorzugte Ausführungsform entsprechend der Erfindung besteht darin, dass der bezüglich der Rohrkörper-Vorschub- bzw. Förderflussrichtung stromaufwärts befindliche Kontakt beweglich und arretierbar angeordnet ist. Eine besondere Bedeutung gewinnen die letztgenannten Erfindungsmerkmale dann, wenn der stromaufwärts beweglich und arretierbar angeordnete Kontakt ausserhalb der Wärmekammer stromaufwärts vor dieser angeordnet ist. Hierbei macht sich die Erfindung den Effekt zunutze, dass der sich bewegende Rohrkörper erst verhältnismässig langsam nach Passieren des stromaufwärts angeordneten Kontaktes erwärmt wird und schliesslich eine Glühzone bildet. Entsprechend der Erfindung braucht daher die unter Schutzgasatmosphäre betriebene Wärmekammer parallel zur Förderrichtung des Rohrkörpers nur so lang ausgebildet sein, dass gerade nur der vor Abkühlung und Oxydation des Lots (Kupfer) zu schützende Abschnitt der Erwärmungsstrecke, insbesondere aber die Glühzone insgesamt, von der Wärmekammer umschlossen werden. Anderseits verbleibt stromaufwärts vor der Wärmekammer eine hinreichend grosse Rohrkörper-Strecke, entlang welcher der bewegliche Kontakt zur Einhaltung optimaler Lötverhältnisse hin- und herverschoben bzw. eingestellt werden kann.

In den Zeichnungen sind vorteilhafte Ausführungsbeispiele entsprechend der Erfindung dargestellt, es zeigen:

Fig. 1 eine perspektivische Teilansicht eines zweilagigen kupfergelöteten Stahlrohres,

Fig. 2 einen bezüglich der Rohrvorschub- bzw. Förderflussrichtung stromaufwärts und

Fig. 3 den dazugehörigen, aus zeichnerischen Gründen abgetrennten stromabwärts angeordneten Teil einer Vorrichtung zur Herstellung von kupfergelöteten Stahlrohren.

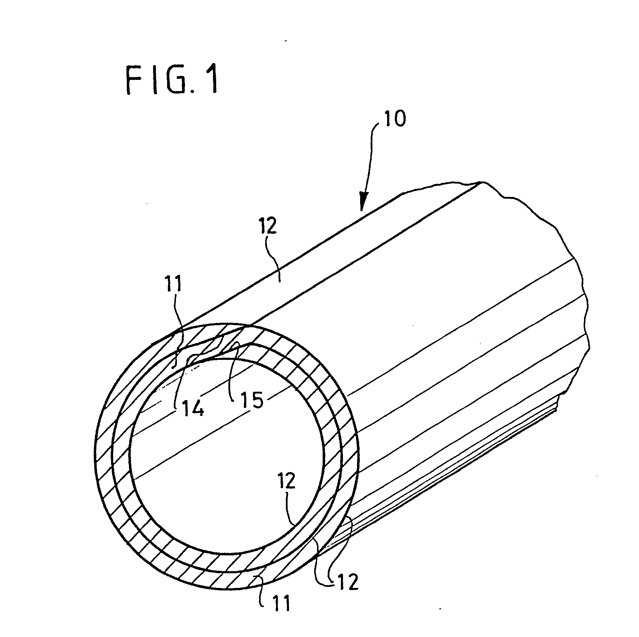

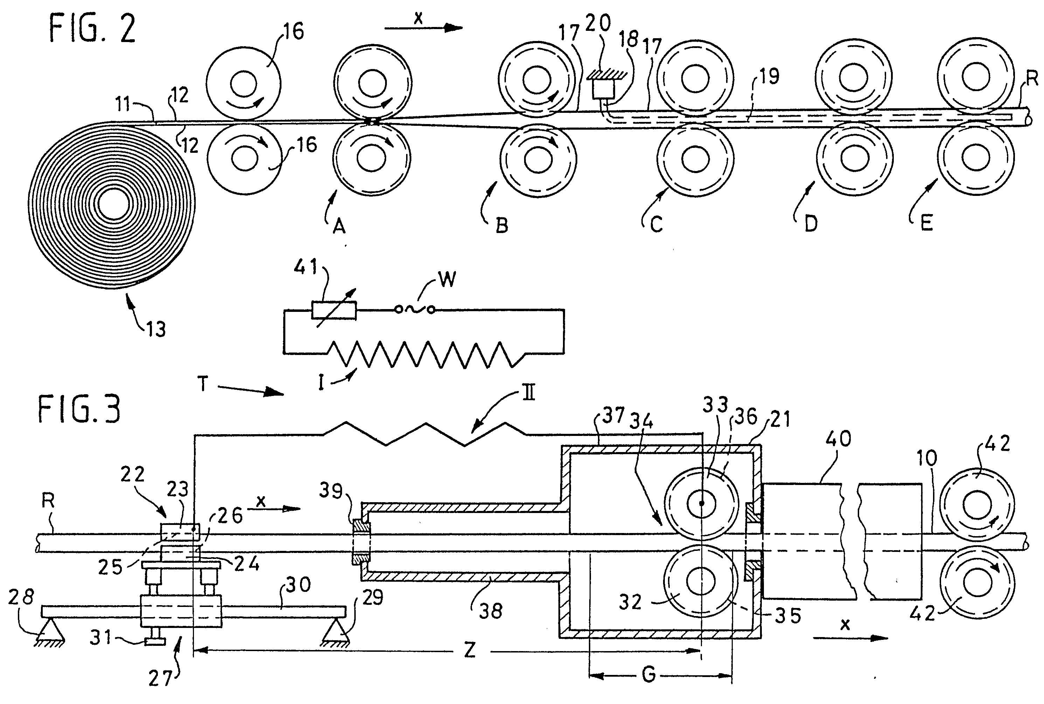

In Fig. 1 ist ein kupfergelötetes Zweilagen-Stahlrohr mit der Bezugsziffer 10 versehen. Die beiden Stahlband-Lagen sind mit der Bezugsziffer 11 und die Kupferschichten bzw. Kupferlagen (dick durchgezogene Linien) sind mit der Bezugsziffer 12 bezeichnet. Das Ausgangsmaterial zu dem in Fig. 1 dargestellten kupfergelöteten Zweilagen-Stahlrohr ist ein beidseitig mit je einer galvanisch aufgebrachten Kupferschicht 12 versehenes Stahlband 11, welches ein Coil 13 gemäss Fig. 2 bildet.

Aus Fig. 1 ist im übrigen ersichtlich, dass das Bandmaterial an den Stellen 14 und 15 zur Erzielung eines gleichmässig gerundeten Rohrkörpers je eine Abschrägung aufweist.

Verfahren und Vorrichtung seien nun anhand der Fig. 2 und 3 wie folgt beschrieben:

Zwei Abzugsrollen 16 ziehen das kupferbeschichtete Stahlband 11, 12 von dem auf nichtdargestellte Weise drehgelagerten Coil 13 ab, bewegen demnach das kupferbeschichtete Band 11, 12 in Vorschub- bzw. Förderflussrichtung x. In den Walzengestellen A und B wird das kupferbeschichtete Stahlband 11, 12 sodann zu einem Schlitzrohr mit nach oben weisendem Schlitz 17 bildsam (kalt) verformt. Durch den Schlitz 17 greift ein an seinem Ende 18 bei 20 raumfest gelagerter Dorn 19 durch den Schlitz 17 in das Innere des Schlitzrohres ein und erstreckt sich in der Vorschubrichtung x über die Walzengestelle C, D und E. Bezüglich der Förderflussrichtung x hinter dem Walzengestell E ist ein Rohrkörper R entstanden, welcher der Fig. 1 bereits entspricht, mit dem Unterschied allerdings, dass er noch nicht verlötet ist. Der Rohrkörper R durchläuft sodann in Förderflussrichtung x einen bezüglich einer Wärmekammer 21 stromaufwärts ausserhalb der Wärmekammer 21 angeordneten Kontakt 22. Der Kontakt 22 besitzt einen oberen Kontaktschuh 23 und einen unteren Kontaktschuh 24. Kontaktschuh 23 und Kontaktschuh 24 sind auf nichtdargestellte Weise elektrisch leitend miteinander verbunden. Die Kontaktschuhe 23, 24 besitzen jeweils gestrichelt angedeutete teilkreiszylindermantelförmige Kontaktflächen 25, 26, welche zugleich mit dafür sorgen, dass der noch unverlötete Rohrkörper R seinen Zusammenhalt bewahrt.

Oberer und unterer Kontaktschuh 22, 23 sind zug- und druckfest bewegungseinheitlich miteinander gekuppelt, wobei der untere Kontaktschuh 24 auf einer insgesamt mit 27 bezeichneten Gleitkonsole getragen ist, welche gleitbar auf einem an den Unterstützungsstellen 28, 29 befestigten, sich parallel zur Förderflussrichtung x erstreckenden Support 30 gleitbar angeordnet ist.

Die Gleitkonsole 27 ist demnach mitsamt den von ihr getragenen Kontaktschuhen 23, 24 in und entgegen der Förderflussrichtung x bewegbar und an einer beliebigen Stelle mittels einer Feststellschraube 31 arretierbar.

Während der Kontakt 22 die bezüglich der Förderflussrichtung x stromaufwärts gelegene Kontaktstelle bildet, stellt ein stromabwärts gelegenes Kontaktwalzenpaar 32, 33 den insgesamt mit 34 bezeichneten stromabwärts gelegenen Kontakt dar. Die Kontaktwalzen 32, 33 weisen zur Gewährleistung eines guten elektrischen Kontakts Auskehlungen 35, 36 mit jeweils teilkreisförmigem Querschnitt auf. Die Kontaktwalzen 32, 33 dienen an der Stelle, an der sich das Kupferlot 12 verflüssigt hat, neben ihrer elektrischen Kontaktfunktion zugleich dem Zusammenhalt des Rohrkörpers R, bevor sich dieser zu einem nach Kühlung verfestigten kupfergelöteten Zweilagen-Stahlrohr 10 stabilisiert hat.

Die Wärmekammer 21 weist stromaufwärts von ihrem die Kontaktwalzen 32, 33 aufnehmenden Teil 37 einen abgesetzten Fortsatz 38 mit einer Einlaufbuchse 39 aus geeignetem Werkstoff, z.B. aus Stahl mit polierten Buchsen-Gleitflächen, auf.

Die Wärmekammer 21 ist, ebenso wie die nachgeschaltete, gegebenenfalls aussen mit Wasser gekühlte Kühlkammer 40, mit einem Schutzgas, im vorliegenden Fall mit Wasserstoff oder aber mit einem Wasserstoff-Stickstoff-Gemisch, gefüllt, damit eine Oxydation der Oberfläche vermieden wird.

Die Versorgung der Kontakte 22, 34 mit elektrischer Leistung geht von der Sekundärseite II eines Transformators T, dessen Primärseite mit I bezeichnet ist, aus. Die Primärseite I besitzt, wie zeichnerisch dargestellt, die Transformatorwicklung mit der höheren Windungszahl, während die Sekundärseite die Transformatorwicklung mit der geringeren Windungszahl aufweist. Die Wechselspannungsquelle ist in Fig. 3 mit W bezeichnet. Primärseitig ist der Wechselspannungsquelle W ein regelbarer Ohm'scher Leistungswiderstand 41 zur Regelung der Stromstärke in Reihe nachgeschaltet.

Bei angeschalteter elektrischer Leistung erfolgt demnach die Erwärmung auf der durch die Kontakte 22, 24 begrenzten Erwärmungszone Z.

Die durch die konduktive Erwärmung bewirkte Glühzone allgemein beginnt an sich in einem Bereich stromabwärts hinter der Einlaufbuchse 39. Die für die Erfindung massgebliche Glühzone, welche durch Weissglut, verbunden mit einem grünlichen Schimmer, gekennzeichnet ist, befindet sich in einem Bereich, dessen Länge in Fig. 3 mit dem Bezugszeichen G bezeichnet ist. Durch Verschieben des Kontakts 22 relativ zum raumfesten Kontakt 34 kann die Länge der Glühzone G bei sich verändernden Rohrkörper-Daten konstant gehalten werden. Sobald sich die Glühzone G über einen bestimmten Betrag hinaus verlängert, verschiebt man den Kontakt 22 in Förderflussrichtung x langsam so weit nach rechts, bis sich die Glühzone G auf das gewünschte Mass verkürzt hat. Verkürzt sich die Glühzone G aber in unzulässiger Weise, so verschiebt man den Kontakt 22 entgegen der Förderflussrichtung x nach links. Wenn der Kontakt 22 nach links verschoben wird, wird zugleich gegebenenfalls durch Betätigung des verstellbaren Ohm'schen Widerstandes 41 die Stromstärke erhöht, während gegebenenfalls die Stromstärke verringert wird, wenn der Kontakt 22 in Förderflussrichtung x nach rechts verschoben wird.

Zur Beobachtung der Glühzone G hat es sich als zweckmässig erwiesen, die Wärmekammer 21 mit einem Sichtfenster zu versehen, welches zugleich Messskalen tragen kann.

Ein Abzugsrollenpaar 42 sorgt für eine schonende Hinausbeförderung des abgekühlten fertigen Zweilagen-Stahlrohres 10, welches sodann zu Rohrcoils aufgewickelt oder aber in Rohrlängenabschnitte unterteilt werden kann.

Die Temperatur in der Glühzone G liegt – bei Kupfer als Lötmittel – oberhalb des Schmelzpunktes von Kupfer, im vorliegenden Anwendungsfall bei etwa 1150 °C.

## Patentansprüche

1. Verfahren zur Herstellung gelöteter, mehrlagiger Metallrohre (10), bei welchem ein Metallband, insbesondere Stahlband (11), unter Zuführung eines insbesondere im wesentlichen aus Kupfer bestehenden Lots (12) stufenweise zu einem mehrlagigen, vornehmlich zweilagigen, Rohrkörper (R) bildsam verformt, der bewegte Rohrkörper (R) sodann über zwei voneinander distanzierte, eine Erwärmungszone (Z) begrenzende elektrische Kontaktstellen (22, 34) konduktiv auf Löttemperatur erwärmt, unter Bildung einer Glühzone für eine Zeitdauer auf Löttemperatur gehalten und sodann wieder abgekühlt wird, dadurch gekennzeichnet, dass zum Zwecke einer gleichmässigen Erwärmung des Rohrkörpers (R) auf Löttemperatur über den nötigen Zeitraum hinweg die Länge der Glühzone (G) für eine bestimmte Rohrvorschubgeschwindigkeit gemessen und dadurch konstant gehalten wird, dass der Abstand (Z) zwischen den beiden elektrischen Kontaktstellen (22, 34) und gegebenenfalls auch die elektrische Leistung in Abhängigkeit von einer Änderung der Rohrkörper-Daten, z.B. proportional der pro Zeiteinheit in die Erwärmungszone (Z) hineinbewegten Masse des Rohrkörpers (R), eingestellt werden.

2. Vorrichtung zur Durchführung des Verfahrens nach Anspruch 1 mit einer Walz- bzw. Einrollvorrichtung zur Herstellung des Rohrkörpers (R), einer konduktiven Erwärmungsvorrichtung mit zwei bezüglich des Rohrkörpers voneinander distanzierten, diesen berührenden elektrischen Kontakten (22, 34), einer die Erwärmungszone mindestens teilweise umschliessenden Wärmekammer (21) sowie mit einer sich an die Erwärmungszone anschliessenden, eine Kühlstrecke aufnehmenden Kühlkammer (40), dadurch gekennzeichnet, dass zum Zwecke einer gleichmässigen Erwärmung des Rohrkörpers (R) auf Löttemperatur über den nötigen Zeitraum hinweg die Länge der Glühzone (G) für eine bestimmte Rohrvorschubgeschwindigkeit messbar und dadurch konstant haltbar ist, dass mindestens ein Kontakt (22) beweglich und arretierbar ausgebildet ist.

3. Vorrichtung nach Anspruch 2, dadurch gekennzeichnet, dass ein Kontakt (34) raumfest und der andere Kontakt (22) beweglich und arretierbar ausgebildet ist.

4. Vorrichtung nach Anspruch 3, dadurch gekennzeichnet, dass der bezüglich der Rohrkörper-Vorschub- bzw. Förderflussrichtung (x) stromaufwärts befindliche Kontakt (22) beweglich und arretierbar angeordnet ist.

5. Vorrichtung nach Anspruch 4, dadurch gekennzeichnet, dass der stromaufwärts beweglich und arretierbar angeordnete Kontakt (22) ausserhalb der Wärmekammer (21) stromaufwärts vor dieser angeordnet ist.

## Claims

1. Process for the production of brazen, multilayer metal tubes (10) in which a metal band, especially steel band (11), is mouldably formed stepwise to give a multilayer, preferably double layer tubular body (R), with the introduction of a solder (12), especially one consisting essentially of copper, the moving tubular body (R) then conductively heated to brazing temperature via two electric contact points (22, 34) distanced from one another and bounding a heating zone (Z), maintained for a period of time at brazing temperature with the formation of an annealing zone and then again cooled, characterised in that, for the purpose of a uniform heating of the tubular body (R) to brazing temperature over the necessary period of time, the length of the annealing zone (G) is measured for a definite rate of tube advance and is thereby held constant, that the distance (Z) between the two electric contact points (22, 34) and possibly also the electric capacity are adjusted in dependence upon a change of the tubular data, e.g. proportionally to the mass of the tubular body (R) moved per unit time into the heating zone (Z).

2. Device for the carrying out of the process according to claim 1 with a roller or rolling up device for the production of the tubular body (R), a conductive heating device with two electric contacts (22, 34) distanced from one another with regard to the tubular body and touching this, a heating chamber (21) encompassing the heating zone at least partly, as well as with a cooling chamber (40) following the heating zone and having a cooling stretch, characterised in that for the purpose of a uniform heating of the tubular body (R) to brazing temperature over the necessary period of time, the length of the annealing zone (G) is measurable for a definite rate of tube advance and can thereby be kept constant, that at least one contact (22) is made movable and stoppable.

3. Device according to claim 2, characterised in that one contact (34) is spatially bound and the other contact (22) is made movable and stoppable.

4. Device according to claim 3, characterised in that the contact (22) present upstream with regard to the tubular body advancing or conveying direction (x) is arranged to be movable and stoppable.

5. Device according to claim 4, characterised in that the contact (22) arranged to be movable upstream and to be stoppable is arranged outside of the heating chamber (21) and upstream before this.

## Revendications

1. Procédé de fabrication de tubes métalliques brasés (10) à plusieurs couches, dans lequel on déforme plastiquement et graduellement une bande métal, en particulier une bande d'acier (11) avec amenée d'une brasure (12), en particulier formée essentiellement de cuivre, en un corps tubulaire (R) à plusieurs couches, particulièrement à deux couches, ensuite on chauffe le corps tubulaire (R) en mouvement, par conduction, à la température de brasage, par deux points (22, 34) de contact électrique espacés l'un de l'autre, délimitant une zone de chauffage (3), on le maintient à la température de brasage pendant un certain temps avec formation d'une zone de recuit et ensuite on le refroidit à nouveau, caractérisé par le fait qu'en vue d'un chauffage uniforme du corps tubulaire (R) à la température de brasage, on mesure, pendant le laps de temps nécessaire, la longueur de la zone de recuit (G) pour une vitesse déterminée d'avancement du tube et qu'ainsi on la maintient constante, que l'on règle la distance (Z) entre les deux points (22, 34) de contact électrique et éventuellement aussi la puissance électrique en fonction d'une variation des données du corps tubulaire, par exemple proportionnellement à la masse du corps tubulaire (R) qui est amenée, par unité de temps, à l'intérieur de la zone (Z) de chauffage.

2. Appareil pour la mise en œuvre du procédé selon la revendication 1, comportant un dispositif de laminage ou de roulage pour la fabrication du corps tubulaire (R), un dispositif de chauffage par conduction muni de deux contacts électriques (22, 34) espacés l'un de l'autre relativement au corps tubulaire, touchant celui-ci, une chambre de chauffage (21) entourant au moins partiellement la zone de chauffage, ainsi qu'une chambre de refroidissement (40) faisant suite à la zone de chauffage et logeant un parcours de refroidissement, caractérisé par le fait qu'en vue d'un chauffage uniforme du corps tubulaire (R) à la température de brasage, la longueur de la zone de recuit (G) pour une vitesse déterminée d'avancement du tube peut être mesurée pendant le laps de temps nécessaire et peut être maintenue constante par le fait qu'au moins un contact (22) est conçu pour pouvoir se mouvoir et être arrêté.

3. Appareil selon la revendication 2, caractérisé par le fait qu'un contact (34) est fixe dans l'espace et que l'autre contact (22) est conçu pour pouvoir se mouvoir et être arrêté.

4. Appareil selon la revendication 3, caractérisé par le fait que le contact (22), situé en amont relativement au sens d'avancement ou de transport (x) du corps tubulaire, est disposé de manière à pouvoir se mouvoir et être arrêté.

5. Appareil selon la revendication 4, caractérisé par le fait que le contact (22), disposé de manière à pouvoir se mouvoir vers l'amont et être arrêté, est disposé à l'extérieur de la chambre de chauffage (21), en amont de celle-ci.

# FIG. 1

FIG. 2

FIG. 3